# EUROPEAN PATENT SPECIFICATION

(11) **EP 1 166 428 B1**
(45) Date of publication and mention of the grant of the patent: **08.12.2004**
(21) Application number: 00926758.4
(22) Date of filing: 23.03.2000
(51) Int. Cl.: H02K 11/00, H02K 3/00

(54) **MONITORING INTERNAL PARAMETERS OF ELECTRICAL MOTOR SYSTEMS**
ÜBERWACHUNG VON INTERNEN PARAMETERN VON ELEKTROMOTOREN
SURVEILLANCE DES PARAMETRES INTERNES DE SYSTEMES ELECTRIQUES A MOTEURS

(30) Priority: 24.03.1999 US 125857 P
(43) Date of publication of application: 02.01.2002
(73) Proprietor: SHELL INTERNATIONALE RESEARCH MAATSCHAPPIJ B.V., 2596 HR Den Haag (NL)
(72) Inventor: SMITH, David, Randolph, NL-2288 GD Rijswijk (NL)
(86) International application number: PCT/EP2000/002669
(87) International publication number: WO 2000/057540

(56) References cited:
- DE-U- 29 503 853
- FR-A- 1 120 900
- US-A- 4 827 487
- US-B1- 4 901 070
- PATENT ABSTRACTS OF JAPAN vol. 004, no. 175 (E-036) 03 December 1980 & JP 55 122 451 A (TOSHIBA CORP) 20 September 1980

## Description

### Description Of Invention

The invention relates to a method for measuring and monitoring electrical motor systems using a fibre optical cable and/or sensor in accordance with the preamble of claim 1.

Methods of this kind are known from US patent No. 4,827,487, Japanese patent application No. 55122451 and German Gebrauchsmuster 29503853 U.

US patent No. 4,827,487 discloses that the fibre optical cable may be arranged in the hollow core of a hollow core electrical conductor and German gebrauchsmuster discloses that the fibre optical cable may be arranged in a groove which extends along the length of a conductor strip.

A disadvantage of the known methods is that it is expensive to create a hollow core or groove in an electrical conductor wire or strip and that the wire may be weakened as a result thereof.

US patent No. 4,901,070 discloses a pressure and electrical resistance monitoring system for an electrical motor of an electrical submersible pump which uses a megger and is a rather complex system to monitor downhole pressure and the insulating resistance of the motor winding.

In accordance with the present invention the disadvantages of the prior art methods are alleviated. This is accomplished by the characterising features of claim 1.

Thus, this invention provides an improved process to measure and monitor conditions of electrical submersible motors. The method according to the invention employs, optic fibers and sensors, or micromachines wound integrally with the electrical wire used in the construction of an electrical motor's stator or armature.

One embodiment of the invention wraps optic fiber and sensors familiar to those in the art of telemetry, around the electrical wire, and then encapsulates and attaches the optic fiber to the wire by covering or coating the electrical wire and the optic fiber with an insulation material. Hence the optic fiber and the sensors, machines, and devices are wound longitudinally along the length of the electric wire, and the two are then wound through the electric motor stator slots to form the stator windings. The stator can then have insulation applied to it and the electric wires through varnishing, epoxy coating, or any of the other insulation techniques used by those familiar to the art of making motors. Moreover, the invention allows for the curing temperature of said insulation materials to be closely monitored by using the optic fibers as an intrinsic temperature monitor by using optical time domain reflectometry techniques and Raman backscattering.

Another embodiment uses the optic fiber, wound around electrical wire and passed through the stator, to be a communication path between sensors outside the electric motor.

This invention solves the problem of monitoring internal electrical motor parameters. For example it is often useful from both a design and development prospective as well for operational control, safety, and extending motor life, to monitor certain internal parameters of an electric motor. This invention also allows parameters to be measured along multiple nodes along the axis of the motor as well as at different radial positions in the motor. These variables give useful insight to heat rise, heat flux, hot spots, and the subsequent heat profiles in different motor designs, as well as offering an intimate knowledge of the motors internal conditions of pressure and vibration, and stator movement under during actual running and operation of the electrical system.

Electrical motor performance and life cycle are functions of these internal conditions, which the invention monitors. Therefore, this invention's ability to monitor these conditions in electrical motors allows for improvements and or changes in design and operations to be made and then confirmed via the internal monitoring offered by this invention.

The most direct application of this technology is in the development of new, highly reliable, and more efficient electrical motors for subterranean oil and gas wells.

This invention will be used to design electrical motors that will have the internal parameters measured for many applications. It is often very useful to monitor the internal vibration of an electrical motor in operations to detect poor dampening in the system, poor alignment of the motor rotor, or vibrations induced by start ups or implements and devices attached to the motors (i.e. compressors, fans, pumps, etc.). This will assist in designing more efficient and reliable electrical motors systems both from a mechanical perspective as well as an electrical perspective. This invention also provides a method to pass optical communications through an electrical motor from outside the electrical motor.

### Description of a preferred embodiment

The invention will be described in more detail with reference to the accompanying drawings in which
Fig. 1 is a schematic cross-sectional view of an electrical motor having a stator with electrical wires of which at least one wire is equipped with a fibre optical sensor system embedded in the insulation;
Fig. 2 shows at a larger scale than Fig. 1 a cross-sectional view of the wire with fibre optical sensor system of Fig. 1; and
Fig. 3 shows at a larger scale than Fig. 1 a longitudinal sectional view of the wire and fibre optical sensor system of Fig. 1.

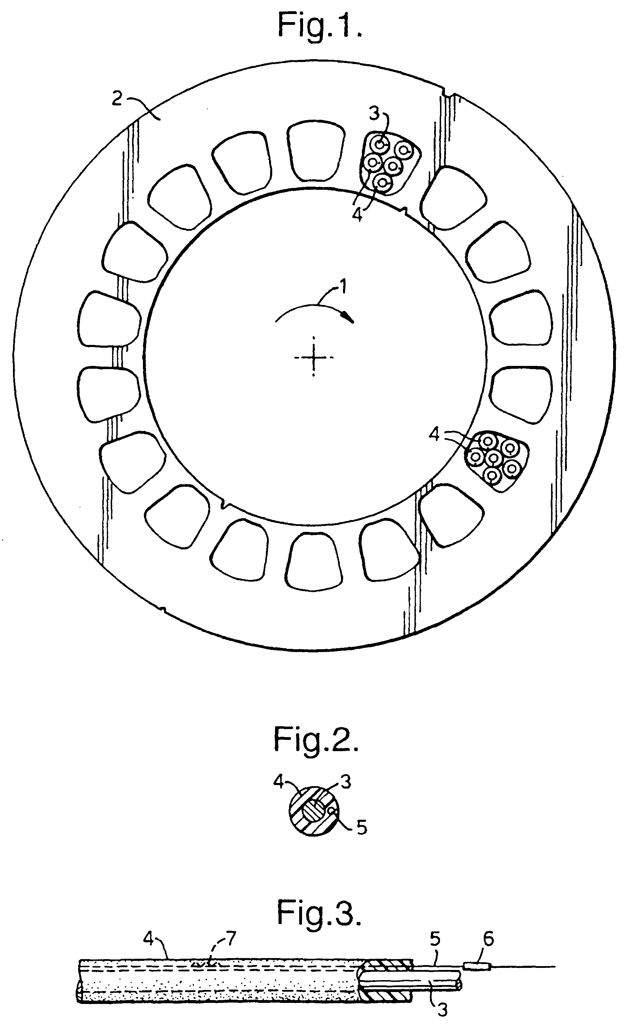

Referring to Fig. 1 there is shown an electrical motor having a rotor represented by arrow 1 and a stator 2 which comprises a series of electrical wires 3 that are wound such that when an electrical current passes through the wires 3 a rotating electromagnetic field is created which induces the rotor 1 to rotate relative to the stator 2. As shown in Fig. 2 and 3 at least one wire 3 has an electrical insulation coating 4 in which a fibre optical cable 5 is embedded, which cable 5 may be provided with suitable microsensors 6, such as an accelerometer to detect vibrations, and/or optic gratings, such as fibre bragg gratings 7 that reflect light of a wavelength equal to the grating width and allow light of other wavelengths to pass through the cable 5. The gratings 7 may be designed such that the reflected wavelength varies with temperature such that the fibre optical cable 5 forms an elongate string of miniature thermometers along the length of the wire 3. Likewise the optic sensors 6 may be formed by seismic sensors which are formed by similar gratings that reflect varying wavelengths in response to vibrations so that the fibre optical cable 5 is an elongate multiparameter sensor system that accurately detects any overheating and/or vibrations, for example when the associated pump is blocked or runs dry or when a bearing has worn out.

## Claims

1. A process for measuring and monitoring electrical motor systems, said process comprising:
providing a motor system having at least one component selected from a stator and an armature, said at least one component connected to at least one electrical wire;
incorporating at least one means for data measurement comprising a fibre optical cable with said at least one electrical wire;
collecting data with said at least one means for data measurement; and
transferring said collected data to a data collection station; **characterised in that** the motor is an electrical motor of a downhole electrical submersible pump for pumping of hydrocarbon fluids in a well and that the fibre optical cable is provided with physical parameter sensors and is embedded in an electrical insulation coating surrounding at least one wire of the motor windings.

2. A process according to claim 1 wherein said fibre optical cable is wrapped around said electrical wire.

3. A process according to claim 2 wherein said fibre optical cable and sensors are encapsulated and attached to said electrical wire by covering or coating the electrical wire and the means for collecting data with a varnish or epoxy coating.

4. A process according to claim 1 wherein said sensors are temperature sensors which employ optical time domain reflectometry and/or Raman backscattering techniques.

## Patentansprüche

1. Verfahren zum Messen und Überwachen von Elektromotorsystemen, wobei das Verfahren umfaßt:
Schaffen eines Motorsystems mit zumindest einem aus einem Stator und einem Anker ausgewählten Bestandteil, wobei zumindest eine Komponente mit zumindest einem elektrischen Draht verbunden wird;
Einbau zumindest eines Mittels zur Datenmessung, das ein faseroptisches Kabel aufweist, in zumindest einen elektrischen Draht;
Sammeln der Daten mit dem zumindest einen Mittel zum Messen der Daten; und
Übertragen der gesammelten Daten zu einer Datensammelstation, **dadurch gekennzeichnet, daß** der Motor ein Elektromotor einer unterirdischen elektrischen Tauchpumpe zum Pumpen von Kohlenwasserstoffluiden in einem Bohrloch ist und daß das faseroptische Kabel mit physikalischen Parametersensoren versehen und in einer elektrischen Isolationsummantelung eingebettet ist, welche zumindest einen Draht der Motorwicklungen umgibt.

2. Verfahren nach Anspruch 1, bei welchem das faseroptische Kabel um den elektrischen Draht gewickelt ist.

3. Verfahren nach Anspruch 2, bei welchem das faseroptische Kabel und die Sensoren in den elektrischen Draht durch Abdecken oder Ummanteln des elektrischen Drahtes und der Mitteln zum Sammeln der Daten mit einer Lackierung oder Epoxyummantelung eingekapselt und befestigt sind.

4. Verfahren nach Anspruch 1, bei welchem die Sensoren Temperatursensoren sind, welche optische Zeitbereichs-Reflektometrien und/oder Raman-Rückstreuungstechniken verwenden.

## Revendications

1. Procédé pour mesurer et pour surveiller des systèmes de moteur électrique, ledit procédé comprenant les étapes qui consistent à:
doter un système de moteur d'au moins un composant sélectionné parmi un stator et une armature, ledit composant au moins présent étant relié à au moins un fil électrique,
incorporer au moins un moyen de mesure de données qui comprend un câble à fibres optiques dans ledit fil électrique au moins présent,
collecter des données à l'aide dudit moyen de mesure de données au moins présent et
transférer lesdites données collectées vers un poste de collecte de données, **caractérisé en ce que** le moteur est le moteur électrique d'une pompe électrique submersible de fond de puits qui pompe des fluides d'hydrocarbure dans un puits et **en ce que** le câble à fibre optique est doté de détecteurs de paramètres physiques et intégré dans un revêtement d'isolation électrique qui entoure au moins un fil des bobinages du moteur.

2. Procédé selon la revendication 1, dans lequel ledit câble à fibres optiques est enroulé autour dudit fil électrique.

3. Procédé selon la revendication 2, dans lequel ledit câble à fibres optiques et lesdits détecteurs sont encapsulés et fixés sur ledit fil électrique en recouvrant le fil électrique et le moyen de collecte de données d'un vernis ou d'un revêtement en époxy ou en les y appliquant.

4. Procédé selon la revendication 1, dans lequel lesdits détecteurs sont des détecteurs de température qui utilisent une technique de réflectométrie optique à domaine de temps et/ou une technique de rétrodiffusion de Raman.
